Europäisches Patentamt

**European Patent Office**

**Office européen des brevets**

(19)

(11) Veröffentlichungsnummer: **0 035 489**
A1

(12)

# EUROPÄISCHE PATENTANMELDUNG

(21) Anmeldenummer: 81890034.2

(51) Int. Cl.³: **F 16 D  43/18**

(22) Anmeldetag: **26.02.81**

(30) Priorität: **03.03.80  AT 1148/80**

(71) Anmelder: **Steyr-Daimler-Puch Aktiengesellschaft, Kärntnerring 7, Wien (AT)**

(43) Veröffentlichungstag der Anmeldung: **09.09.81 Patentblatt 81/36**

(72) Erfinder: **Steinhofer, Konrad, Auf der Murwiese 9, A-8041 Graz (AT)**

(74) Vertreter: **Hübscher, Gerhard, Dipl.-Ing. et al, Patentanwälte Dipl.-Ing. Gerhard Hübscher Dipl.-Ing. Helmut Hübscher Dipl.-Ing. Heiner Hübscher Spittelwiese 7, A-4020 Linz (AT)**

(84) Benannte Vertragsstaaten: **DE FR IT**

(54)  **Anwerffliehkraftkupplung für Leichtmotorräder.**

(57)  Bei einer Anwerffliehkraftkupplung für Leichtmotorräder, deren mit Reibbelägen (4) versehene Kupplungsbacken (3) um zur Kupplungsachse parallele Bolzen (5) schwenkbar sind und sich beim Kupplungsvorgang an den Mantel (2) der Kupplungstrommel (1) anlegen, sind zur Erzielung eines geräuscharmen Anwerfvorganges die Reibbeläge (4) der Kupplungsbacken (3) konisch ausgebildet und es ist der Mantel (2) der Kupplungstrommel (1) entsprechend konisch geformt. Ferner sind die Reibbeläge (4) und der Mantel (2) der Kupplungstrommel (1) doppelkonisch gestaltet oder es liegen die Reibbeläge (4) an einer achsnormalen Stützscheibe (9) an, wenn die Kupplungstrommel (1) einen einfach konischen Mantel (2) besitzt.

## Anwerffliehkraftkupplung für Leichtmotorräder

Die Erfindung bezieht sich auf eine Anwerffliehkraftkupplung für Leichtmotorräder mit sich gegen Federkraft an den Mantel der Kupplungstrommel anlegenden, um zur Kupplungsachse parallele Bolzen schwenkbaren Kupplungsbacken mit Reibbelägen.

Die bisherigen Anwerffliehkraftkupplungen weisen einen zylindrischen Mantel der Kupplungstrommel und dementsprechend auch zylindrische Reibbeläge an den Kupplungsbacken auf. Beim Anwerfen mit Hilfe der Pedale greifen die Backen zunächst am Trommelmantel an, zufolge des erforderlichen Anwerfdrehmomentes sinkt jedoch bei zu wenig energischem Antreten die Anwerfdrehzahl ab, so daß sich die Kupplungsbacken von der Trommel wieder lösen. Damit fällt das Anwerfdrehmoment weg, die Anwerfdrehzahl steigt und es kommt zu neuerlichem Kraftschluß zwischen Backen und Trommel, was insgesamt zu einem Rattern beim Anwerfvorgang führt. Das Rattern wird noch begünstigt durch die wechselnde Größe des Anwerfdrehmomentes während einer Kurbelwellen-Umdrehung.

Somit liegt der Erfindung die Aufgabe zugrunde, diesen Mangel zu beseitigen und die eingangs geschilderte Anwerffliehkraftkupplung so zu verbessern, daß auch bei gemächlichem Antreten kein Rattern mehr auftritt und somit ein geräuscharmer Anwerfvorgang erzielt wird.

Die Erfindung löst die gestellte Aufgabe dadurch, daß die Reibbeläge der Kupplungsbacken konisch ausgebildet sind und der Mantel der Kupplungstrommel entsprechend konisch geformt ist, wobei entweder die Reibbeläge und der Mantel der Kupplungstrommel doppelkonisch gestaltet sind oder die Reibbeläge bei einfach konischem Mantel der Kupplungstrommel an einer achsnormalen Stützscheibe anliegen.

Durch die Konizität von Mantel und Reibbelägen ergibt sich eine Keilwirkung, die schon bei vergleichsweise geringen Umfangskräften ein Lösen der Backen von der Trommel verhindert, d.h. es reicht die Federkraft nicht mehr aus, die Backen während des Antretens in ihre Grundstellung zurückzuziehen. Dadurch wird jegliches Rattern verhindert, und es wird auch ein möglichst schlagartiges Einrücken der Kupplung erreicht, was bei Anwerfkupplungen von Vorteil ist, um mit möglichst geringem Pedalweg das Anlassen des Motors zu bewirken. Das unerwünschte Rattern wird selbst dann vermieden, wenn ohne Motor-Dekompression mit dadurch erhöhten und noch ungleichförmigerem Anwerfdrehmoment angetrieben wird.

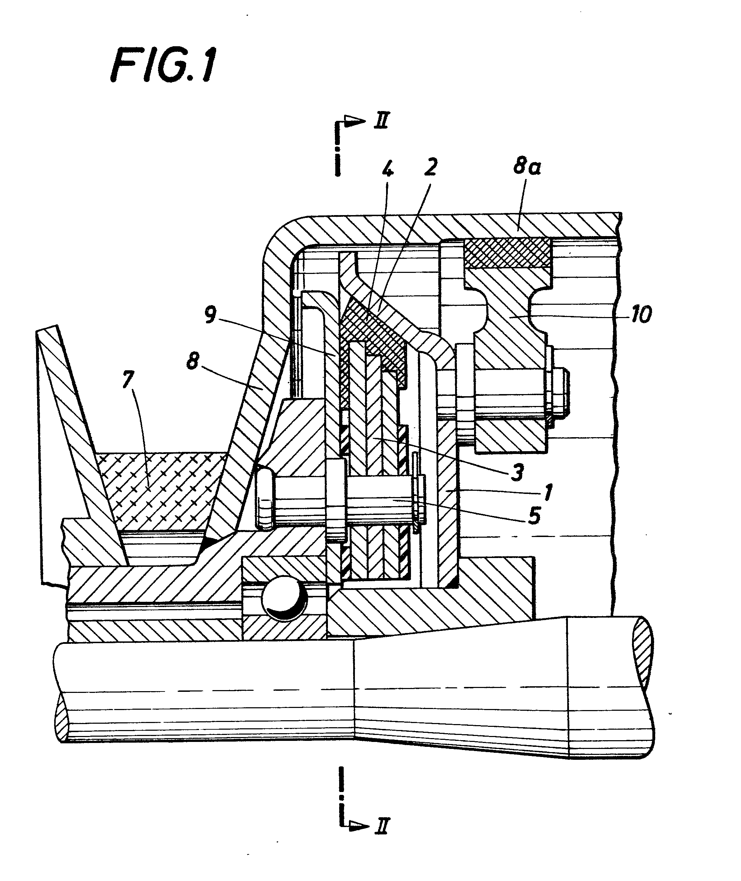

In der Zeichnung ist der Erfindungsgegenstand in einem Ausführungsbeispiel dargestellt, und zwar zeigen Fig. 1 eine Hälfte einer Anwerffliehkraftkupplung im Axialschnitt und

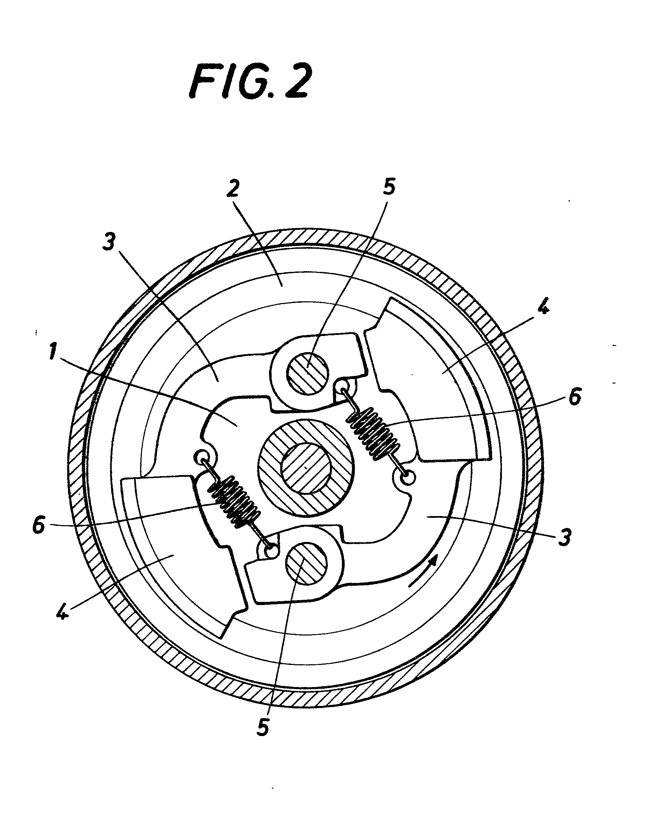

Fig. 2 im Schnitt nach der Linie II-II der Fig. 1 in kleinerem Maßstab.

Die Anwerffliehkraftkupplung besteht aus einer Trommel 1, die drehfest auf der Kurbelwelle sitzt und einen Mantel 2 aufweist, und aus Kupplungsbacken 3 mit Reibbelägen 4. Die Kupplungsbacken 3 sind um zur Kupplungsachse parallele Bolzen 5 gegen die Kraft der Federn 6 schwenkbar. Der Antrieb der Anwerffliehkraftkupplung erfolgt über einen Keilriemen 7, der die Keilriemenscheibe 8 antreibt, mit der die Bolzen 5 und eine Stützscheibe 9 drehfest verbunden sind.

Sobald sich die Keilriemenscheibe 8 und damit die Bolzen 5 in Drehung versetzt bzw. versetzen, werden die Kupplungsbacken gegen die Kraft der Federn 6 nach außen geschwenkt und die konischen Reibbeläge 4 verklemmen sich zwischen dem ebenfalls konischen Trommelmantel 2 der Kupplungstrommel 1 und der Stützscheibe 9. Der Kraftschluß bleibt solange erhalten, bis der Motor anspringt und die Kupplungsbacken 10 der Anfahrkupplung zur Anlage am Trommelmantel 8a kommen, so daß sich eine Geschwindigkeitsdifferenz zwischen den Reibbelägen und dem Mantel 2 der Kupplungstrommel 1 ergibt.

P a t e n t a n s p r u c h :

Anwerffliehkraftkupplung für Leichtmotorräder mit sich gegen Federkraft an den Mantel der Kupplungstrommel anlegenden, um zur Kupplungsachse parallele Bolzen schwenkbaren Kupplungsbacken mit Reibbelägen, dadurch gekennzeichnet, daß die Reibbeläge (4) der Kupplungsbacken (3) konisch ausgebildet sind und der Mantel (2) der Kupplungstrommel (1) entsprechend konisch geformt ist, wobei entweder die Reibbeläge (4) und der Mantel (2) der Kupplungstrommel (1) doppelkonisch gestaltet sind oder die Reibbeläge (4) bei einfach konischem Mantel (2) der Kupplungstrommel (1) an einer achsnormalen Stützscheibe (9) anliegen.

FIG.1

# FIG. 2

Europäisches
Patentamt

**EUROPÄISCHER RECHERCHENBERICHT**

0035489
Nummer der Anmeldung

EP 81 89 0034

| | **EINSCHLÄGIGE DOKUMENTE** | | KLASSIFIKATION DER ANMELDUNG (Int Cl.) |
|---|---|---|---|
| Kategorie | Kennzeichnung des Dokuments mit Angabe, soweit erforderlich, der maßgeblichen Teile | betrifft Anspruch | |
| X | CH - A - 156 288 (PFLUGER) <br> * Ganzes Dokument * <br><br> -- | 1 | F 16 D 43/18 |
| X | DE - C - 1 192 528 (ZAVODY) <br> * Ganzes Dokument * <br><br> -- | 1 | |
| X | FR - A - 765 239 (SCHOCK-SINNER) <br> * Ganzes Dokument * <br><br> -- | 1 | **RECHERCHIERTE SACHGEBIETE (Int. Cl.)** |
| A | FR - A - 587 112 (CAPLIEZ) | | F 16 D 43/00 <br> B 62 M 23/00 |
| A | FR - A - 1 565 229 (CONSTRUCTA-WERKE) | | |
| A | US - A - 2 915 159 (GUBELMANN) | | |
| A | FR - A - 2 293 860 (LACOUR) <br><br> ---- | | |

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 13-05-1981 | BALDWIN |